Europäisches Patentamt

European Patent Office

Office européen des brevets

(19)

(11) **EP 1 400 028 B1**

(12) **FASCICULE DE BREVET EUROPEEN**

(45) Date de publication et mention
de la délivrance du brevet:
**05.10.2005 Bulletin 2005/40**

(21) Numéro de dépôt: **02748961.6**

(22) Date de dépôt: **19.06.2002**

(51) Int Cl.$^7$: **H04B 1/707**

(86) Numéro de dépôt international:
**PCT/FR2002/002109**

(87) Numéro de publication internationale:
**WO 2003/003603 (09.01.2003 Gazette 2003/02)**

(54) **MODULE DISCRIMINATEUR DE TRAJETS MULTIPLES POUR UN SYSTEME DE NAVIGATION.**

MEHRZWEIGIGDISKRIMINATORMODUL FÜR EIN NAVIGATIONSSYSTEM

MULTIPATH DISCRIMINATOR MODULE FOR A NAVIGATION SYSTEM

(84) Etats contractants désignés:
**DE ES GB IT**

(30) Priorité: **25.06.2001 FR 0108363**

(43) Date de publication de la demande:
**24.03.2004 Bulletin 2004/13**

(73) Titulaire: **AGENCE SPATIALE EUROPEENNE**
**F-75738 Paris Cedex 15 (FR)**

(72) Inventeurs:
• **SCHWEIKERT, Robert**
**82224 Seefeld (DE)**
• **WÖRZ, Thomas**
**81371 Munich (DE)**

(74) Mandataire: **Jacquard, Philippe Jean-Luc et al**
**Cabinet ORES,**
**36,rue de St Pétersbourg**
**75008 Paris (FR)**

(56) Documents cités:
**US-B1- 6 236 673**

• **GAUDENZI DE R ET AL: "A DIGITAL CHIP TIMING RECOVERY LOOP FOR BAND-LIMITED DIRECT-SEQUENCE SPREAD-SPECTRUM SIGNALS" IEEE TRANSACTIONS ON COMMUNICATIONS, IEEE INC. NEW YORK, US, vol. 41, no. 11, 1 novembre 1993 (1993-11-01), pages 1760-1769, XP000413727 ISSN: 0090-6778**

Printed by Jouve, 75001 PARIS (FR)

## Description

La présente invention a pour objet un module discriminateur de trajets multiples pour un système de navigation, ainsi qu'un système de navigation comprenant un tel module.

Dans les dix dernières années, les systèmes de modulation à spectre réparti et à séquence directe (DS/SS) ont pris une importance croissante.

Actuellement, cette technique est mise en oeuvre non seulement dans les systèmes de navigation par satellite, GPS et GLONASS, mais elle a également été introduite dans des systèmes de communication terrestre et par satellite par exemple US-Standard IS-95, GLOBALSTAR, et plus récemment dans la troisième génération de téléphones mobiles selon le standard UMTS ainsi que dans le système européen de navigation par satellite GALILEO.

Le concept de la modulation DS/SS, par exemple la modulation bi-phase BPSK, met en oeuvre l'introduction d'un code de bruits pseudo-aléatoires PRN qui a pour conséquence que le signal modulé qui en résulte présente une bande passante plus large qu'un signal qui transmettrait seulement les symboles de données. C'est dans ce sens que la densité spectrale du signal est "répartie".

Dans le récepteur, une réplique générée localement du code PRN transmis est alignée avec la phase du code du signal reçu. En particulier, dans les récepteurs de navigation, un alignement de la phase du code est essentiel pour déterminer de manière précise le temps d'arrivée TOA qui est utilisé pour la détermination de la distance géométrique entre le transmetteur et le récepteur. Une fois l'alignement réalisé, l'estimation de la phase de la porteuse et la détermination des symboles des données transmises est possible.

Cet alignement est réalisé de manière classique dans un récepteur à l'aide d'une boucle verrouillée en phase DLL ("Delay-Locked-Loop") dont un exemple est décrit dans l'article de M. SIMON *et al.* publié dans l'ouvrage "Spread Spectrum Communications Handbook" publié par McGRAWHILL, Incorporated 2ème Edition 1994.

Cet alignement utilise le résultat d'une corrélation entre le signal reçu et des versions anticipées E et retardées L d'un signal de code de référence généré localement pour calculer un signal d'erreur qui est proportionnel à l'erreur de phase du code (différence entre la phase du code estimée et la phase reçue).

Ce signal d'erreur doit indiquer dans quelle direction la phase du signal de référence doit être décalée (avance ou retard) pour être en synchronisation avec le signal reçu. Un espacement entre les codes avancés E et retardés L est en général d'un bit d'une séquence de pseudo-bruit ("chip").

Les signaux de type SRC (qui ont pour spectre une cosinusoide surélevée) sont définis dans le standard UMTS. Ce type de signaux SRC est susceptible d'être également adopté dans le système GALILEO évoqué ci-dessus. Un récepteur numérique mettant en oeuvre ces signaux est décrit dans l'article de R. de GAUDENZI *et al.* intitulé "A Digital Chip Timing Recovery Loop for Band-Limited Direct-Sequence Spread-Spectrum Signals" publié dans IEEE Trans. on Comm., vol. 41, n° 11, pages 1760-1769, novembre 1993.

La précision de la mesure du temps d'arrivée est perturbée de manière négative par la présence d'une distorsion due à des trajets multiples, et il en résulte, dans le cas de la télémétrie, une diminution de la précision de la détermination de la position, et dans le cas de la transmission de données, une augmentation du taux d'erreur de bit ou de trame. Ceci est particulièrement vrai dans le cas où la distorsion multi-trajets est essentiellement représentée par une réflexion unique qui provient d'un point qui est situé dans l'environnement immédiat du récepteur avec une faible dynamique.

La superposition des signaux directs et réfléchis est ainsi susceptible de causer de la gigue ("jitter") qui affecte les mesures du temps d'arrivée TOA de la boucle DLL.

Il en résulte que des techniques permettant de réduire l'impact de ces trajets multiples sur la détermination de la phase du code sont d'intérêt primordial notamment dans le domaine de la navigation.

Jusqu'à ce jour, les procédés de compensation de trajets multiples destinés à la télémétrie ont été développés essentiellement dans le cadre de récepteurs GPS.

De ce fait, un grand nombre de ces algorithmes utilise le fait que le débit apparent ("Chip Rate") du code C/A disponible publiquement est beaucoup plus faible que la bande passante de la transmission. Il est alors avantageux de réduire l'écart temporel entre les signaux de code de référence avancés E et retardés L, jusqu'à ce qu'ils aient une valeur qui est inférieure à un bit une séquence de pseudo-bruits ("One Chip Duration") pour diminuer l'erreur induite par les trajets multi-faisceaux.

Dans le cadre des systèmes de type SRC, étant donné que le spectre de fréquences est strictement limité à $1 + \beta$ fois le débit apparent du code ($\beta$ désignant le facteur d'atténuation des impulsions SRC), les méthodes ci-dessus indiquées ne sont pas efficaces pour compenser les trajets multi-faisceaux.

Il a par ailleurs été suggéré dans l'article de Philip G. MATTOS intitulé "Multipath elimination for the low-cost consumer GPS" publié dans le Compte-rendu de la conférence ION GPS 1996 à Kansas City, pages 665-671, de remplacer les points de corrélation avancés E et retardés L par deux points de corrélation avancés. Cet article ne donne par contre pas de moyens d'implémentation de cette technique.

La présente invention a pour objet un module discriminateur qui convienne à une utilisation dans un système de communication ou de navigation à spectre réparti, et plus particulièrement selon une modulation de type SRC.

Selon une première variante, l'invention concerne un module discriminateur de trajets multiples pour un système de communication et/ou de navigation qui met en oeuvre une modulation à spectre réparti, module qui présente une entrée apte à recevoir des signaux de navigation, un échantillonneur pour fournir des signaux échantillonneurs à une fréquence double de la fréquence apparente fc du code desdits signaux, ainsi qu'un sous-module de calcul d'un signal d'erreur $e_k$ à partir desdits signaux échantillonnés et d'un code de répartition C|K|L généré localement, caractérisé en ce que :

$$e_k = K_\beta \cdot \Re\left(\frac{Z_K{}^{--}}{Z_K{}^-} + S\beta\right)$$

$$avec \begin{cases} Z_k^{\cdot} = \left[r_{k-t2} \cdot C_{|K|L}\right] \otimes h_k^{b} \\ Z_k^{\cdot\cdot} = \left[r_{k-t1} \cdot C_{|K|L}\right] \otimes h_k^{b} \end{cases}$$

$$ou \begin{cases} Z_k^{\cdot} = \left[r_k \cdot C_{|K-t2|L}\right] \otimes h_k^{b} \\ Z_k^{\cdot\cdot} = \left[r_k \cdot C_{|K-t1|L}\right] \otimes h_k^{b} \end{cases}$$

K$\beta$ = constante

*et*

$$S_\beta = -\frac{g(-t1Tc)}{g(-t2Tc)}$$

*avec*

$$g(aTc) = \frac{\mathrm{Sin}\Pi a\ \mathrm{Cos}\Pi\beta a}{\pi a[1-(2\beta a)]}$$

$\beta$ désignant le facteur d'atténuation du signal SRC.

Selon une deuxième variante, l'invention concerne un module discriminateur de trajets multiples pour un système de communication et/ou de navigation qui met en oeuvre une modulation à spectre réparti, module qui présente une entrée apte à recevoir des signaux de navigation, un échantillonneur pour fournir des signaux échantillonneurs à une fréquence double de la fréquence apparente fc du code desdits signaux, ainsi qu'un sous-module de calcul d'un signal d'erreur $e_k$ à partir desdits signaux échantillonnés et d'un code de répartition C|K|L généré localement, caractérisé en ce que :

$$e_k = K_\beta \left(-\frac{Z_K{}^{--}}{Z_K{}^-} + S\beta\right)$$

$$avec \begin{cases} Z_K^- = \left[ r_{k-t2} . C_{|K|L} \right] \otimes h_k^b \\ Z_{\overline{K}}^{--} = \left[ r_{k-t1} . C_{|K|L} \right] \otimes h_k^b \end{cases}$$

$$ou \begin{cases} Z_K^{--} = \left[ r_k . C_{|K-t2|L} \right] \otimes h_k^b \\ Z_{\overline{K}}^{-} = \left[ r_k . C_{|K-t1|L} \right] \otimes h_k^b \end{cases}$$

$K_\beta$ = constante
*et*

$$S_\beta = \frac{g(-t1Tc)}{g(-t2Tc)}$$

*avec*

$$g(aTc) = \frac{Sin\Pi a \; Cos\Pi\beta a}{\pi a[1-(2\beta a)]}$$

$\beta$ désignant le facteur d'atténuation du signal SRC.

Selon une troisième variante, l'invention concerne un module discriminateur de trajets multiples pour un système de communication et/ou de navigation qui met en oeuvre une modulation à spectre réparti, module qui présente une entrée apte à recevoir des signaux de navigation, un échantillonneur pour fournir des signaux échantillonneurs à une fréquence double de la fréquence apparente fc du code desdits signaux, ainsi qu'un sous-module de calcul d'un signal d'erreur $e_k$ à partir desdits signaux échantillonnés et d'un code de répartition C|K|L généré localement, caractérisé en ce que :

$$e_k = K_\beta \; \Re\left( 2\frac{Z_{\overline{K}}^{--}}{Z_K^- + Z_K^+} + S_\beta \right)$$

$$avec \begin{cases} Z_K^+ = \left[ r_{k+1/2} . C|K|L \right] \otimes h_k^b \\ Z_K^+ = \left[ r_{k-t2} . C_{|K|L} \right] \otimes h_k^b \\ Z_{\overline{K}}^- = \left[ r_{k-t1} . C_{|K|L} \right] \otimes h_k^b \end{cases}$$

$$ou \begin{cases} Z_K^+ = \left[ r_k . C_{(k+1/2)L} \right] \otimes h_k^b \\ Z_{\overline{K}}^- = \left[ r_k . C_{|k-t2|L} \right] \otimes h_k^b \\ Z_{\overline{K}}^{--} = \left[ r_k . C_{|k-t1|L} \right] \otimes h_k^b \end{cases}$$

$\beta$ = constante

*et*

$$S\beta = \frac{g(-t1Tc)}{g(-t2Tc)}$$

*avec*

$$g(aTc) = \frac{Sin\Pi a Cos\Pi\beta a}{\pi a[1-(2\beta a)]}$$

β désignant le facteur d'atténuation du signal SRC.

Dans chacun des cas ci-dessus, $h_k^b$ désigne la réponse impulsionnelle d'un filtre passe-bas.

Le module discriminateur peut être caractérisé en ce que :

$$K\beta = \frac{1}{\dfrac{d}{d\varepsilon}\left(\dfrac{g\left((\varepsilon-t1)Tc\right)}{g\left((\varepsilon-t2)Tc\right)}\right)_{\varepsilon=0}}$$

Pour chacune des trois variantes ci-dessus, on peut avoir t1 = 1,5 et t2 = 0,5.

L'invention concerne également un système de navigation caractérisé en ce qu'il présente un module discriminateur tel que défini ci-dessus.

L'invention concerne enfin un système de navigation caractérisé en ce qu'il présente un module discriminateur générant un signal d'erreur e'$_k$ assurant de manière connue en soi une correction en boucle fermée à partir de signaux échantillonnés $Z_K^+$ et $Z_K^-$, auquel est associé un module discriminateur tel que défini ci-dessus pour générer en boucle ouverte à partir d'un dit signal d'erreur e$_k$ un signal de correction de la sortie de phase du code.

D'autres caractéristiques et avantages de l'invention apparaîtront mieux à la lecture de la description qui va suivre, donnée à titre d'exemple non limitatif, en liaison avec les dessins dans lesquels :

- la figure 1 illustre l'influence d'un signal multi-trajets comprenant un trajet direct et au moins un trajet réfléchi ;
- la figure 2 est un bloc diagramme d'une boucle DLL selon l'article de R. de GAUDENZI *et al.* évoqué ci-dessus ;
- les figures 3a et 3b représentent une courbe de la fonction d'autocorrélation g(t) respectivement pour un module selon la figure 1 et selon l'invention ;
- la figure 4 représente un bloc diagramme d'une boucle DLL incorporant un discriminateur selon l'invention ; et
- la figure 5 est un bloc diagramme d'une boucle DLL incorporant un discriminateur classique ainsi qu'un module discriminateur selon la présente invention.

Un signal s$_T$(t) en bande de base à spectre réparti en séquence direct (DS-SS) est représenté par la formule 3-1, le mot de code réparti ayant une longueur de 2 bits de séquence de pseudo-bruit (ou "chips") et chaque symbole de donnée dp,q,i présentant M/L mots de code répartis

$$s_T(t) = \sqrt{a \cdot P_s} \cdot \sum_{i=-\infty}^{\infty} \left( d_{P,\lfloor i \rfloor_M} \cdot c_{P,\lfloor i \rfloor_L} + j \cdot b \cdot d_{Q,\lfloor i \rfloor_M} \cdot c_{Q,\lfloor i \rfloor_L} \right) \cdot g_T(t - iT_c) \quad (3\text{-}1)$$

Les facteurs *a* et *b* sont dans les cas suivants.

$a = 1.0$ *et b = 0*     BPSK DS - SS
$a = 0.5$ *et b = 1, avec* $d_{P,\lfloor i \rfloor M} = d_{Q,\lfloor i \rfloor M}$     QPN DS - SS
$a = 0.5$ *et b = 1, avec* $d_{P,\lfloor i \rfloor M} \neq d_{Q,\lfloor i \rfloor M}$     Bi-BPSKDS-SS

avec,

$P_s$          puissance transmise
$d_{P/Q,i}$       symboles de données

$$\left(d_{P/Q,i} \in [-1,1]\right)$$

$c_{P/Q,i}$       bit (" chip") d' un mot de code réparti de longueur

$$L\left(c_{P/Q,i} \in [-1,1]\right)$$

$T_c = 1/f_c$     durée d' un bit d'une séquence de pseudo - bruit (ou durée d' un " chip")
$g_T(t)$          forme de l'impulsion d' un bit ou "chip" par exemple SRC
$M$               longueur des symboles de donnée dans la durée d' un bit ou "chip"

$\lfloor i \rfloor_M = \mathrm{int}(i/M)$
$|i|_M = i \bmod M$

Après transmission par un canal avec addition de bruit blanc Gaussien (AWGN) qui présente une densité spectrale symétrique $N_{o/2}$, le signal reçu filtré r(t) est donné par la formule (3-2)

$$
\begin{aligned}
r(t) &= s_T(t-\tau) \otimes g_r(t) \\
&= \sqrt{a \cdot P_s} \cdot \sum_{i=-\infty}^{\infty} \left(d_{P,\lfloor i \rfloor_M} \cdot c_{P,|i|_L} + j \cdot b \cdot d_{Q,\lfloor i \rfloor_M} \cdot c_{Q,|i|_L}\right) \\
&\quad \cdot g(t-\tau-iT_c) \cdot \exp(j(\Delta\omega(t)+\phi(t))) + n(t)
\end{aligned}
\tag{3-2}
$$

g(t) = $g_T(t) \otimes g_T(t)$ désignant la forme de l'impulsion d'un bit ou "chip" après filtrage et $\otimes$ désignant une convolution.

g(t) constitue donc la fonction d'auto-corrélation de $g_T(t)$.

$\Delta\omega(t)$ désigne l'écart résiduel de la fréquence de porteuse après mélange du signal dans la bande de base.

$\phi(t)$ désigne la phase de la porteuse du signal reçu.

En raison de la similitude entre les composants en phase et en quadrature du signal selon la formule 3-2, on choisit de ne conserver que la composante en phase pour la suite. De ce fait, les symboles p,q désignant ces deux situations n'ont pas été conservés pour alléger la notation.

La formule 3-2 devient alors :

$$
r(t) = \sqrt{P_s} \cdot \sum_{i=-\infty}^{\infty} d_{\lfloor i \rfloor_M} \cdot c_{|i|_L} \cdot g(t-\tau-iT_c) \cdot \exp(j(\Delta\omega(t)+\phi(t))) + n(t)
\tag{3-3}
$$

pour un système de type BPSK DS-SS par exemple.

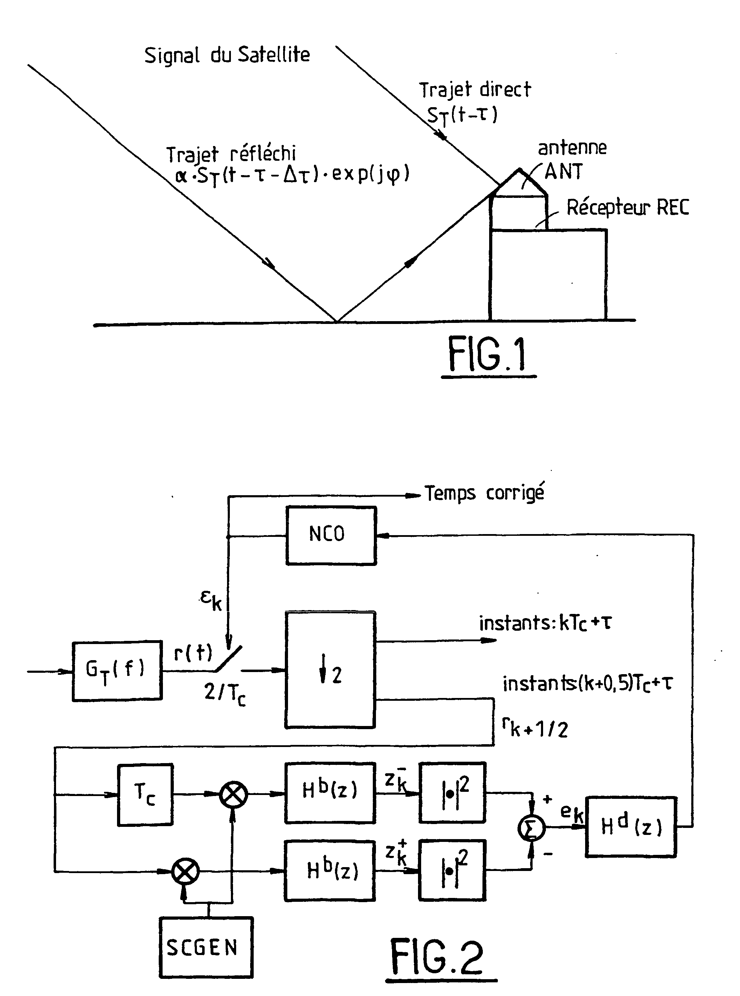

La figure 1 est un modèle de trajet multiple utilisable pour montrer l'effet des trajets multiples sur la boucle DLL. En plus du signal direct provenant du satellite, l'antenne reçoit une seconde version retardée de ce même signal, dénommée composante "multi-trajets", due à une réflexion, le retard de ce deuxième signal provenant du trajet plus long qu'il a du parcourir.

La somme de ces deux signaux reçus par l'antenne peut s'exprimer par la formule suivante :

$$S'_T(t) = S_T(t-\tau) + \alpha \cdot S_T(t-\tau-\Delta\tau) \cdot \exp(j\phi) \qquad (3\text{-}4)$$

avec

| | |
|---|---|
| $a$ | atténuation du signal réfléchi par rapport au signal direct |
| $\Delta\tau$ | retard du signal réfléchi par rapport au signal direct |
| $\varphi = 2\pi.\Delta\tau.f_c / c$ | décalage de phase de la porteuse du signal réfléchi par rapport au signal direct (c : vitesse de lumière, $f_c$ : fréquence de la porteuse) |

Après filtrage (voir formules 3.2 et 3.3), on obtient :

$$r(t) = r(t) + \alpha \cdot r(t - \Delta\tau) \cdot \exp(j\phi) \qquad (3\text{-}5)$$

L'explication a été donnée en tenant compte d'une seule réflexion. En pratique, il existe plusieurs composants correspondant à des trajets réfléchis multiples qui se superposent au signal direct.

Le document de R. de GAUDENZI *et al.*, déjà mentionné, met en oeuvre une boucle DLL dont l'architecture sera rappelée ci-après, en relation avec la figure 2.

On remarquera:

- que le convertisseur analogique-numérique pourrait être disposé à un autre endroit ;
- que le décalage temporel destiné à aligner le signal de réflexion local sur le signal reçu, peut être appliqué, soit au signal de référence local, soit au signal reçu.

Le signal en bande de base r(t) obtenu par filtrage par un filtre de caractéristiques $G_T(f)$est échantillonné à deux fois la fréquence de bit ou "chip", c'est-à-dire à 2fc. Les échantillons correspondant à des instants "demi-entiers" $(k + 0,5)$ Tc + $\tau$ sont dirigés vers la boucle DLL, alors que les autres échantillons correspondant à des instants "entiers" kTc + $\tau$ sont dirigés vers la corrélation ponctuelle et le suivi de la phase de la porteuse et la démodulation des données (circuit NCO).

Les échantillons correspondant à des instants semi-entiers sont donnés par :

$$r_{k+1/2} = \sqrt{P_s} \cdot \exp(j\phi) \cdot \sum_{i=-\infty}^{\infty} d\lfloor i \rfloor_M \cdot c\lfloor i \rfloor_L \cdot g\big((\varepsilon_k + k + 1/2 - i)T_c\big) + n_{k+1/2} \qquad (3\text{-}6)$$

Ces échantillons $r_{k+1/2}$ sont dirigés suivant deux branches. Dans la branche supérieure (sur la figure 2), les échantillons sont retardés d'un bit ou "chip" Tc avant d'être multipliés par la k[ème] valeur du code de répartition $C_{|k|_L}$ généré localement par le générateur de code SCGEN. Cette multiplication est suivie dans chacune des branches par un filtrage passe-bas $H^b(z)$.

On obtient ainsi des échantillons :

$$Z_k^+ = \left[ r_{k+1/2} \cdot c|k|_L \right] \otimes h_k^b \qquad (3\text{-}7)$$

$$Z_k^- = \left[ r_{k-1/2} \cdot c|k|_L \right] \otimes h_k^b$$

$h_k^b$ désignant la réponse impulsionnelle du filtre passe-bas. La bande passante de ce filtre est limitée en pratique vers le bas par :

- ➤ le rythme $f_s$ ($f_s = f_c / M$) des symboles de données, faute de quoi on perd de l'énergie utile, ou
- ➤ la dynamique entre le transmetteur et le récepteur ; la distance entre le transmetteur et le récepteur est supposée constante vis-à-vis de la bande passante de $H^b(z)$.

Le signal d'erreur $e_k$ est généré de la manière suivante ;

$$e_k = \left|Z_k^-\right|^2 - \left|Z_k^+\right|^2 \qquad (3\text{-}8)$$

Pour obtenir un signal d'erreur directement exploitable par le circuit opérationnel NCO, le signal $e_k$ est en général filtré par un autre filtre numérique, le filtre de boucle, dont la fonction de transfert est $H^d(z)$. Etant donné que $e_k$ est indépendant des symboles de données, les caractéristiques de $H^d(z)$ sont principalement déterminées par la réponse souhaitée de la boucle DLL à la dynamique entre le transmetteur et le récepteur, la boucle d'estimation de phase devant être à même de suivre une distance linéaire croissante ou décroissante entre le transmetteur et le récepteur sans erreur résiduelle de suivi.

La caractéristique $n(\varepsilon)$ indique la dépendance du signal d'erreur $e_k$ en fonction de l'erreur de phase de code $\varepsilon$.

$$n(\varepsilon) = E[e_k|\varepsilon_k = \varepsilon \ \forall \ k] \qquad (3.9)$$

E[•] désignant la probabilité

On a:

$$n(\varepsilon) = g^2[(\varepsilon - 0.5)T_c] - g^2[(\varepsilon + 0.5)T_c] \qquad (3.10)$$

avec un codage SRC de facteur d'atténuation $\beta$, $g(\varepsilon T_c)$ vaut :

$$g(\varepsilon T_c) = \frac{\sin(\Pi\varepsilon)}{\pi\varepsilon} \cdot \frac{\cos(\pi\beta\varepsilon)}{1 - (2\,\beta\varepsilon)^2}$$

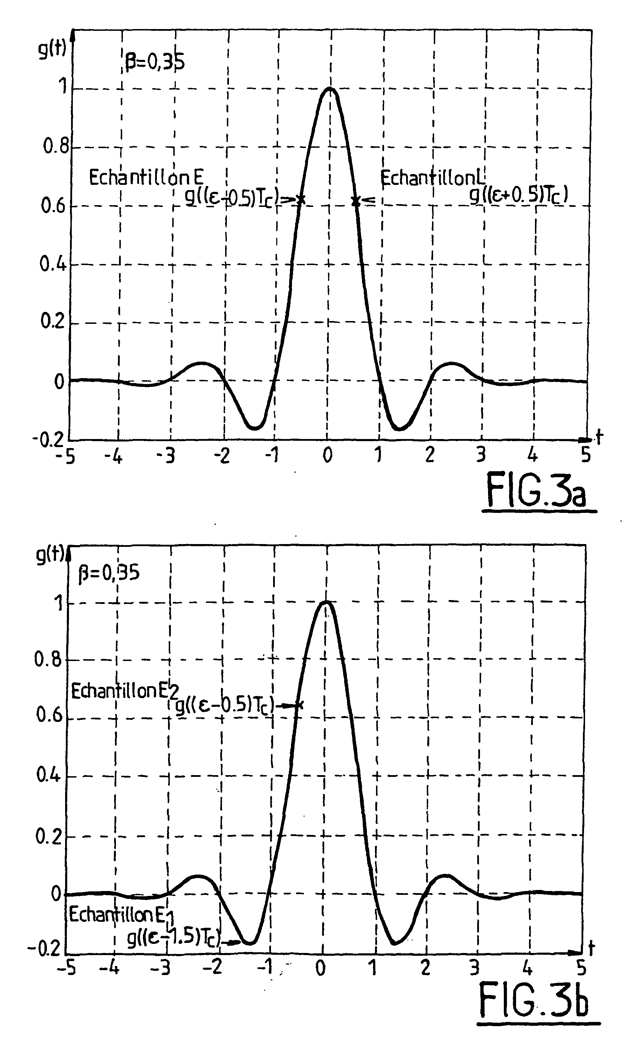

La fonction d'auto-corrélation $g(\varepsilon T_c)$ avec ($\beta$ = 0.35 est montrée à la figure 3a. Les échantillons avancés E et retardés L selon (3.8) sont indiqués pour $\varepsilon$ = 0 (pas d'erreur de phase de code).

Selon la formule (3.10), la courbe en S qui en résulte est illustrée à la figure 3a. A l'aide de cette courbe, la boucle DLL commande l'interpolateur de sorte que le signal reçu est aligné avec le signal généré localement (c'est-à-dire $\varepsilon$ = 0).

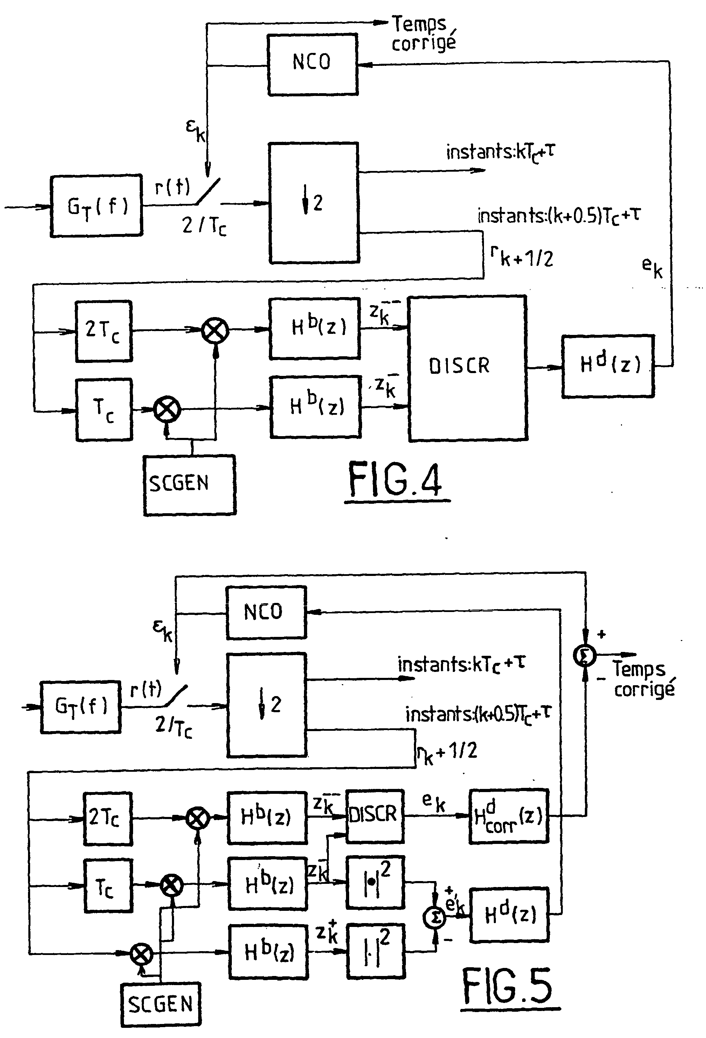

Le discriminateur selon l'invention (figure 4) met en oeuvre deux échantillons avancés E1 ($Z_k^-$) et E2($Z_k^-$) à des instants $(\varepsilon - t_1)T_c$ et $(\varepsilon - t_2)T_c$, qui sont générés selon la formule :

$$e_k = K_\beta \cdot \Re\left(\frac{Zk^{--}}{Zk^-} + S_\beta\right)$$

- $\Re(\bullet)$ désignant la partie réelle
- $K_\beta$ est une constante
- $S_\beta$ est un décalage
- Les deux échantillons E2 et E1 sont définis (Voir (3.7)) par :

$$Z_k^- = {}_L\, r_{k-t2} \cdot C_{P,|K|L} {}^{\rfloor} \otimes h\frac{b}{k} \text{ et } Z_k^- = {}_L\, r_{k-t1} \cdot C_{P,|K|L} {}^{\rfloor} \otimes h\frac{b}{k}$$

avec par exemple $t_1$ = 1,5 et $t_2$ = 0,5

On peut également générer ces deux échantillons en décalant la réplique locale du code selon la formule :

$$Z_K^- = [r_k \cdot C_{P,|(k-t_2)|L}] \otimes h_k^b$$

et

$$Z_{\overline{K}}^{--} = \left[r_k \cdot C_{P,|(k-t_1)|L}\right] \otimes h_k^b$$

Le décalage doit être choisi pour que la valeur attendue du signal d'erreur E[$e_k$] soit nulle lorsque l'erreur de la phase du code $\varepsilon_K$ est nulle.

En appliquant la formule (3 - 12), il en résulte :

$$E\left[\Re\left(\frac{Z_{\overline{K}}^{--}}{Z_{\overline{K}}^-}+S\beta\right)\Big|\varepsilon_k=0\right]\equiv 0 \Rightarrow S\beta=E\left[-\Re\left(\frac{Z_{\overline{K}}^{--}}{Z_{\overline{K}}^-}\right)\Big|\varepsilon_k=0\right]=-\frac{g(-t1Tc)}{g(-t2Tc)} \qquad (3\text{-}13)$$

Le facteur de pente $K_\beta$ est de préférence choisi pour que la valeur de la pente

$$E\left[\frac{d}{d\varepsilon}e_k\Big|\varepsilon_k=0\right] \quad \text{soit} \quad \text{égale} \quad \text{à } 1 \quad \text{lorsque} \quad \varepsilon_K=0$$

Il en résulte :

$$K_\beta = \frac{1}{E\left[\frac{d}{d\varepsilon}\Re\left(\frac{Z_{\overline{k}}^{--}}{Z_{\overline{k}}^-}+S\beta\right)\Big|\varepsilon_k=0\right]} = \frac{1}{\frac{d}{d\varepsilon}\left(\frac{g((\varepsilon-t1)T_c)}{g((\varepsilon-t2)T_c)}\right)\varepsilon=0} \qquad 3.14)$$

avec par exemple $t_1 = 1{,}5$ et $t_2 = 0{,}5$

Comme le montre la formule (3.12), le discriminateur $e_K$ selon l'invention est indépendant de la phase $\Phi$ de la porteuse. Cette dépendance est en effet supprimée grâce au fait que l'on génère le rapport $Z_K^-/Z_K^-$

La fonction d'autocorrélation g(t) pour $\beta = 0{,}35$ est représentée à la figure 3b.

Le module discriminateur peut être utilisé de deux façons :

- soit il peut directement remplacer un discriminateur connu,
- soit il peut être intégré à un discriminateur connu pour fournir des signaux de correction en boucle ouverte pour réduire l'erreur multi-trajets induite.

La figure 4 représente le bloc diagramme d'une branche DLL incluant un module discriminateur selon l'invention.

En comparant les figures 2 et 4, on voit que :

■ La branche qui génère $z_k$ à la figure 2 est remplacée par une branche qui génère $Z_k^-$ avec un élément de retard d'une quantité $2T_c$ ;

■ Le calcul du signal d'erreur $e_K$ en fonction de $z_k$ est réalisé dans le circuit DISCR avec la formule 3-12 correspondant au module selon l'invention.

Dans le cas d'un signal de type SRC, la courbe en S $n(\varepsilon)$ est donnée par :

$$n(\varepsilon) = K\beta \cdot \Re \left( \frac{g((\varepsilon - t1)T_c)}{g((\varepsilon - t2)T_c)} + S_\beta \right) \qquad . \qquad (3\text{-}15)$$

avec

$$g\left(\varepsilon T_c\right) = \frac{\sin(\pi\varepsilon)}{\pi\varepsilon} \cdot \frac{\cos(\pi\beta\varepsilon)}{1 - (2\beta\varepsilon)^2}$$

avec par exemple t1 = 1,5 et t2 = 0,5.

Le module discriminateur correspond avec une bonne approximativement au comportement recherché, à savoir que la sortie de la courbe en S est proportionnelle à l'entrée e ($e = K.\varepsilon$) pour $-0,5\varepsilon \leq 0,5$.

En choisissant $K_\beta$ selon la formule, on a 3-14, K = 1 et e = $\varepsilon$.

Le module discriminateur peut être utilisé pour une estimation en boucle ouverte pour corriger la sortie de phase de code d'un module connu, comme illustré par la figure 4.

Par rapport au module de la figure 4, on dispose une branche supplémentaire avec un élément de retard 2Tc pour générer le signal $Z_K^{--}$.

Un filtre numérique $H^d_{com}$ (z) peut être mis en oeuvre comme filtre passe-bas de la sortie du nouveau module discriminateur. Le fonctionnement de la branche DLL reste inchangé par rapport au cas de la figure 2.

La phase du code est corrigée par la sortie du nouveau module discriminateur qui est alimentée par le filtre passe-bas $H^d_{corr}$ (z). Le nouveau module étant moins affecté par les trajets multiples, l'écart contenu dans la phase estimée du code de la branche DLL peut être en grande partie corrigé.

En variante, la formule peut être remplacée par une fonction d'amplitude :

$$e_k = K_\beta \left( \lambda \frac{\left| Z_k^{--} \right|}{\left| Z_k^{-} \right|} + S_\beta \right)$$

$\lambda$ étant un nombre non nul compris entre -1 et +1.

Selon une autre variante, le signal d'erreur $e_k$ peut être déterminé par :

$$e_k = K_\beta \cdot \Re \left( \frac{2.z_{\overline{k}}^{--}}{z_{\overline{k}}^{-} + z_k^{+}} + S_\beta \right)$$

Cette expression est particulièrement adaptée à une correction en branche ouverte (figure 5). En raison de l'effet de moyenne de sorties des filtres passe-bas $(Z_k^{-} + Z_k^{+})/2$, la puissance du bruit dans la variable résultante est en effet divisée par deux, ce qui conduit à un plus faible bruit dans le signal $e_k$.

On notera que les instants d'échantillonnage $t_1$ = 1,5 et $t_2$ = 0, 5 peuvent avoir d'autres valeurs, et que l'écart $t_1 - t_2$ entre ces instants d'échantillonnage peut être différent d'un bit ou "chip".

**Revendications**

1. Module discriminateur de trajets multiples pour un système de communication et/ou de navigation qui met en oeuvre une modulation à spectre réparti, module qui présente une entrée apte à recevoir des signaux de navigation, un échantillonneur pour fournir des signaux échantillonnés $\Gamma_k$ à une fréquence double de la fréquence apparente fc du code desdits signaux, ainsi qu'un sous-module (DISCR) de calcul d'un signal d'erreur $e_k$ à partir desdits signaux échantillonnés $\Gamma_k$ et de la $k^{ème}$ valeur du code de répartition généré localement, laquelle est désignée par C|K|L, **caractérisé en ce que** le sous-module (DISCR) met en oeuvre le calcul d'un rapport entre des valeurs de corrélation qui comprend deux valeurs de corrélation $(Z_K^{--}, Z_K^{-})$ en avance par rapport avec la valeur de phase réelle, ces valeurs provenant d'une corrélation entre des échantillons du signal reçu et ledit signal de code de répartition généré localement, selon une des formules suivantes :

$$e_k = K_\beta \quad \Re\left(\frac{Z_K^{--}}{Z_K^{-}} + S\beta\right)$$

$$e_k = K_\beta \quad \left(\lambda \frac{Z_K^{--}}{Z_K^{-}} + S_\beta\right)$$

$\lambda$ étant non nul et compris entre -1 et + 1

$$e_k = K_\beta \quad \Re\left(2\,\frac{Z_K^{--}}{Z_K^{-} + Z_K^{+}} + S_\beta\right)$$

$$avec \begin{cases} Z_K^{+} = \left[r_{k+0,5} \cdot C|K|L\right] \otimes h_k^b \\ Z_K^{-} = \left[r_{k-t2} \cdot C_{|K|L}\right] \otimes h_k^b \\ Z_K^{--} = \left[r_{kt-t1} \cdot C_{|K|L}\right] \otimes h_k^b \end{cases}$$

$$ou \begin{cases} Z_K^{+} = \left[r_k \cdot C|k+1/2|L \otimes h_k^b\right] \\ Z_K^{-} = \left[r_k \cdot C_{(k-t2)L}\right] \otimes h_k^b \\ Z_K^{--} = \left[r_k \cdot C_{(k-t1)L}\right] \otimes h_k^b \end{cases}$$

$K_\beta$ = constante
$h_k^b$ désigne la fréquence impulsionnelle d'un filtre passe-bas
$\Re$ désigne la partie réelle
et

$$S_\beta = -\,\frac{g(-t1Tc)}{g(-t2Tc)}$$

*avec*

$$g\ (aTc) = \frac{Sin\Pi aCos\Pi\beta a}{\pi a[1\text{-}(2\beta a)]}$$

β désigne le facteur d'atténuation du signal SRC.

**2.** Module discriminateur selon la revendication 1, **caractérisé en ce que** :

$$K\beta = \cfrac{1}{\cfrac{d}{d\varepsilon}\left(\cfrac{g((\varepsilon - t1)Tc)}{g((\varepsilon - t2)Tc)}\right)\varepsilon = 0}$$

ε désignant l'erreur de phase du code.

**3.** Module discriminateur selon une des revendications précédentes, **caractérisé en ce que** t1 - t2 = 1.

**4.** Module discriminateur selon la revendication 3, **caractérisé en ce que** t1 = 1,5 et t2 = 0,5.

**5.** Module discriminateur selon une des revendications précédentes, **caractérisé en ce que** λ = -1.

**6.** Module discriminateur selon une des revendications précédentes, **caractérisé en ce que** λ = 1.

**7.** Système de navigation, qui présente un module discriminateur générant un signal d'erreur e'k assurant, de manière connue en soi, une correction en boucle fermée à partir de signaux échantillonés $Z_K^+$ et $Z_K^-$ auquel **caractérisé en ce qu'**il lui est associé un module discriminateur selon une des revendications précédentes pour générer en boucle ouverte un signal de correction de la sortie de phase du code.

**Patentansprüche**

**1.** Mehrzweigdiskriminatormodul für ein Kommunikations- und/oder Navigationssystem, das eine Modulation an einem verteilten Spektrum vornimmt, welches Modul einen Eingang aufweist, der dazu ausgelegt ist, Navigationssignale zu empfangen, eine Abtasteinrichtung, um Abtastsignale $\Gamma_k$ mit einer Frequenz zu liefern, die das Doppelte der Scheinfrequenz fc des Codes der Signale beträgt, sowie ein Submodul (DISCR) zur Berechnung eines Fehlersignals $e_k$ aus den Abtastsignalen $\Gamma_k$ und dem k-ten Wert des örtlich erzeugten Zuteilungscodes, der als C|K| L definiert ist, **dadurch gekennzeichnet, dass** das Submodul (DISCR) die Berechnung eines Verhältnisses zwischen Korrelationswerten ausführt, das zwei Korrelationswerte $(Z_K^{--},Z_K^-)$ umfasst, die in Bezug auf den reellen Phasenwert vorauseilen, wobei diese Werte aus einer Korrelation zwischen den Abtastungen des empfangenen Signals und dem Signal des örtlich erzeugten Zuteilungscodes stammen, und zwar nach einer der folgenden Formeln:

$$e_k = K_\beta \Re\left(\frac{Z_K^{--}}{Z_K^-} + S_\beta\right)$$

$$e_k = K_\beta\left(\lambda\frac{Z_K^{--}}{Z_K^-} + S_\beta\right)$$

wobei λ ≠ 0 und zwischen -1 und +1 liegt

$$e_k = K_\beta \Re\left( 2\frac{Z_K^{--}}{Z_K^- + Z_K^+} + S_\beta \right)$$

$$\text{mit} \begin{cases} Z_K^+ = \left[ r_{k+0,5} \cdot C|K|L \right] \otimes h_k^b \\ Z_K^- = \left[ r_{k-t2} \cdot C|K|L \right] \otimes h_k^b \\ Z_K^{--} = \left[ r_{kt-t1} \cdot C|K|L \right] \otimes h_k^b \end{cases}$$

$$\text{oder} \begin{cases} Z_K^+ = \left[ r_k \cdot C|k+1/2|L \right] \otimes h_k^b \\ Z_K^- = \left[ r_k \cdot C_{(k-t2)L} \right] \otimes h_k^b \\ Z_K^{--} = \left[ r_k \cdot C_{(k-t1)L} \right] \otimes h_k^b \end{cases}$$

$K_\beta$ = Konstante
$h_k^b$ bezeichnet die Pulsfrequenz eines Tiefpassfilters
$\Re$ bezeichnet den Realteil

und

$$S_\beta = -\frac{g(-t1\,Tc)}{g(-t2\,Tc)}$$

mit

$$g(aTc) = \frac{Sin\Pi a Cos\Pi\beta a}{\pi a[1-(2\beta a)]}$$

β bezeichnet den Abschwächungsfaktor des Signals SRC.

2. Diskriminatormodul nach Anspruch 1, **dadurch gekennzeichnet, dass**:

$$K_\beta = \frac{1}{\dfrac{d}{d\varepsilon}\left( \dfrac{g((\varepsilon-t1)Tc)}{g((\varepsilon-t2)Tc)} \right)\bigg|\varepsilon = 0}$$

wobei ε den Phasenfehler des Codes bezeichnet.

3. Diskriminatormodul nach einem der vorhergehenden Ansprüche, **dadurch gekennzeichnet, dass** t1 - t2 = 1.

4. Diskriminatormodul nach Anspruch 3, **dadurch gekennzeichnet, dass** t1 = 1,5 und t2 = 0,5.

5. Diskriminatormodul nach einem der vorhergehenden Ansprüche, **dadurch gekennzeichnet, dass** λ = -1.

6. Diskriminatormodul nach einem der vorhergehenden Ansprüche, **dadurch gekennzeichnet, dass** λ = +1.

7. Navigationssystem, das ein Diskriminatormodul aufweist, welches ein Fehlersignal e'k erzeugt, das in an sich bekannter Weise aus Abtastsignalen $Z_K^+$ und $Z_K^-$ eine Korrektur im geschlossenen Regelkreis sicherstellt, **dadurch gekennzeichnet, dass** ihm ein Diskriminatormodul nach einem der vorhergehenden Ansprüche zugeordnet ist, um in einem offenen Regelkreis ein Korrektursignal für den Phasenausgang des Codes zu erzeugen.

**Claims**

1. A multipath discriminator module for a communications and/or navigation system that implements spread spectrum modulation, which module has an input suitable for receiving navigation signals, a sampler for supplying sampled signals $\Gamma_k$ at a frequency twice the apparent frequency fc of the code of said signals, and a submodule (DISCR) for calculating an error signal $e_k$ from said sampled signals $\Gamma_k$ and from the $k^{th}$ value of the locally generated spreading code which is designated by C|K|L, **characterized in that** the submodule (DISCR) calculates a ratio between correlation values which comprise two advance correlation values ($Z_K^{--}$, $Z_K^{-}$) relative to the real phase value, these values coming from correlation between samples of the received signal and said locally generated spreading code signal:

$$e_k = K_\beta \; \Re\left( \frac{Z_K^{--}}{Z_K^{-}} + S_\beta \right)$$

$$e_k = K_\beta \; \left( \lambda \frac{Z_K^{--}}{Z_K^{-}} + S_\beta \right)$$

$\lambda$ being non-zero and lying in the range -1 to +1

$$e_k = K_\beta \; \Re\left( 2\frac{Z_K^{--}}{Z_K^{-} + Z_K^{+}} + S_\beta \right)$$

$$\text{with} \quad \begin{cases} Z_K^{+} = \left[ r_{k+0.5} \cdot C_{|K|L} \right] \otimes h_k^b \\[6pt] Z_K^{-} = \left[ r_{k-t2} \cdot C_{|K|L} \right] \otimes h_k^b \\[6pt] Z_K^{--} = \left[ r_{kt-t1} \cdot C_{|K|L} \right] \otimes h_k^b \end{cases}$$

$$\text{or} \quad \begin{cases} Z_K^{+} = \left[ r_k \cdot C_{|k+1/2|L} \right] \otimes h_k^b \\[6pt] Z_K^{-} = \left[ r_k \cdot C_{(k-t2)L} \right] \otimes h_k^b \\[6pt] Z_K^{--} = \left[ r_k \cdot C_{(k-t1)L} \right] \otimes h_k^b \end{cases}$$

$K_\beta$ = constant
$h_k^b$ designating the impulse response of a lowpass filter
$\Re$ = designating the real portion
and

$$S_{\beta} = -\frac{g(-t1Tc)}{g(-t2Tc)}$$

with

$$g\,(a\mathrm{Tc}) = \frac{\mathrm{Sin}\Pi a\ \mathrm{Cos}\Pi\beta a}{\pi a[1-(2\beta a)]}$$

β designating the attenuation factor of the SRC signal.

2. A discriminator module according to claim 1, **characterized in that**:

$$K\beta = \frac{1}{\dfrac{d}{d\varepsilon}\left(\dfrac{g((\varepsilon-t1)Tc)}{g((\varepsilon-t2)Tc)}\right)_{\varepsilon=0}}$$

ε designating the code phase error.

3. A discriminator module according to any preceding claim, **characterized in that** t1 - t2 = 1.

4. A discriminator module according to claim 3, **characterized in that** t1 = 1.5 and t2 = 0.5.

5. A discriminator module according to any preceding claim, **characterized in that** λ = -1.

6. A discriminator module according to any preceding claim, **characterized in that** λ = 1.

7. A navigation system that presents a discriminator module generating an error signal $e'_k$ serving in conventional manner to correct a closed loop on the basis of sampled signal $Z_K^+$ and $Z_K^-$, said system being **characterized in that** it is associated with a discriminator module according to any preceding claim in order to generate in an open loop a correction signal for the code phase output.

Signal du Satellite

Trajet direct
$S_T(t-\tau)$

Trajet réfléchi
$\alpha \cdot S_T(t-\tau-\Delta\tau) \cdot exp(j\varphi)$

antenne
ANT

Récepteur REC

## FIG.1

Temps corrigé

NCO

$\varepsilon_k$

instants: $kT_C + \tau$

$G_T(f)$   $r(t)$

$2/T_C$

$\downarrow 2$

instants $(k+0,5)T_C + \tau$

$r_{k+1/2}$

$T_C$

$H^b(z)$   $z_k^-$   $|\bullet|^2$

$H^b(z)$   $z_k^+$   $|\bullet|^2$

$+$   $e_k$

$\Sigma$

$-$

$H^d(z)$

SCGEN

## FIG.2

$\beta = 0.35$

Echantillon E
$g((\epsilon - 0.5)T_c) \Rightarrow$

EchantillonL
$g((\epsilon + 0.5)T_c)$

FIG.3a

$\beta = 0.35$

Echantillon E2
$g((\epsilon - 0.5)T_c) \rightarrow$

Echantillon E1
$g((\epsilon - 1.5)T_c) \rightarrow$

FIG.3b

FIG.4

FIG.5